# EUROPÄISCHE PATENTSCHRIFT

(11) **EP 1 307 661 B1**
(45) Veröffentlichungstag und Bekanntmachung des Hinweises auf die Patenterteilung: **06.06.2007**
(21) Anmeldenummer: 01956378.2
(22) Anmeldetag: 26.07.2001
(51) Int. Cl.: F16D 51/02

(54) **TROMMELBREMSVORRICHTUNG**
DRUM BRAKE SYSTEM
SYSTEME DE FREIN A TAMBOUR

(30) Priorität: 02.08.2000 DE 10037599
(43) Veröffentlichungstag der Anmeldung: 07.05.2003
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2001/002826
(87) Internationale Veröffentlichungsnummer: WO 2002/010604

(56) Entgegenhaltungen:
- DE-C- 727 306
- FR-A- 584 232
- FR-A- 699 901
- US-A- 2 778 470

## Beschreibung

### Stand der Technik

Die Erfindung betrifft eine Trommelbremsvorrichtung nach dem Oberbegriff des Anspruchs 1, die insbesondere als Radbremse für ein Kraftfahrzeug vorgesehen ist.

Trommelbremsen sind an sich bekannt. Trommelbremsen bekannter Bauart weisen zwei Bremsbacken auf, die in einer Bremstrommel einliegen. Die Bremsbacken sind an einem Ende schwenkbar abgestützt und am anderen Ende nach außen, d. h. von innen gegen die Bremstrommel drückbar. Das Andrücken der abgestützten Bremsbacken gegen die Bremstrommel bewirkt ein Bremsmoment auf die Bremstrommel.

Eine Bremsbacke der bekannten Trommelbremsen ist auflaufend, d. h. eine Reibungskraft zwischen der Bremstrommel und der Bremsbacke unterstützt die Andruckkraft der Bremsbacke an die Bremstrommel. Es sind auch sog. Duplex-Trommelbremsen bekannt, bei der beide Bremsbacken bei einer Drehrichtung der Bremstrommel auflaufend sind. Die die Andruckkraft der Bremsbacke gegen die Bremstrommel beim Betätigen bekannter Trommelbremsen unterstützende Wirkung der auflaufenden Bremsbacke bewirkt eine Bremskraftverstärkung im Sinne einer Erhöhung eines auf die Bremstrommel ausgeübten Bremsmoments bei gegebener Andruckkraft der Bremsbacke gegen die Bremstrommel. Es kann dadurch mit geringer Andruckkraft der Bremsbacke gegen die Bremstrommel ein hohes Bremsmoment erzielt werden. Die Verstärkung der Bremskraft ist allerdings dadurch beschränkt, dass eine zu hohe Verstärkung zu einem "Verkeilen" der auflaufenden Bremsbacke in der Bremstrommel führt, d. h. die auflaufende Bremsbacke blockiert die Bremstrommel aufgrund der von der rotierenden Bremstrommel auf die auflaufende Bremsbacke ausgeübten Reibungskraft, ohne dass die Andruckkraft der Bremsbacke an die Bremstrommel vergrößert wird. Die Verstärkung der Bremskraft muss so niedrig gewählt sein, dass ein Blockieren der Bremstrommel aufgrund der von ihr auf die auflaufende Bremsbacke ausgeübten Reibungskraft in jedem Betriebszustand der Trommelbremse mit Sicherheit ausgeschlossen ist. Dieses Selbstblockieren der Trommelbremse muss bei jeder Drehzahl, jeder Andruckkraft der Bremsbacke gegen die Bremstrommel, bei kalter und bei erwärmter Trommelbremse und bei jedem Abnutzungszustand eines Reibbremsbelags der Bremsbacken und der Bremstrommel mit Sicherheit ausgeschlossen sein.

Weiterer Nachteil der bekannten Trommelbremsen ist, dass Reibbremsbeläge neuer Bremsbacken durch Betätigen der Trommelbremse an die Bremstrommel angepasst werden müssen, bis sie über ihre gesamte Länge in Umfangsrichtung gleichmäßig an der Bremstrommel anliegen (sog. "Einbremsen"). Dehnt sich die Bremstrommel durch Erwärmung aus, liegen die Reibbremsbeläge nicht mehr gleichmäßig über ihre gesamte Länge in Umfangsrichtung an der Bremstrommel an, sondern die Andruckkraft erhöht sich in einem begrenzten Umfangsbereich der Bremsbacke. In diesem Umfangsbereich kann der Reibbremsbelag überhitzen und "verglasen". Die Bremsbacke muss dann ersetzt werden.

Die FR-A 584 232 offenbart eine Trommelbremse, bei der die Bremsbacken als nach Art einer Gelenkkette gelenkig miteinander verbundene Glieder ausgebildet sind. Zur Betätigung der Trommelbremse werden ein erstes und ein letztes Glied dieser "Bremsbackenkette" in Umfangsrichtung der Bremstrommel auseinander gedrückt. Dadurch legen sich die als Bremsbacken ausgebildeten Glieder von innen gegen die Bremstrommel und bremsen sie.

Die DE-C 727 306 offenbart eine Trommelbremse mit einem in einer Bremstrommel einliegenden Bremsband. Zum Bremsen werden die Enden des Bremsbandes in Umfangsrichtung der Bremstrommel auseinander gedrückt und das Bremsband dadurch von innen gegen die Bremstrommel gedrückt, die dadurch gebremst wird.

### Vorteile der Erfindung

Die erfindungsgemäße Trommelbremsvorrichtung mit den Merkmalen des Anspruchs 1 weist ein Bremsband anstelle von Bremsbacken auf. Das Bremsband ist in radialer Richtung der Bremstrommel biegbar und liegt im Bereich eines Innenumfangs in der Bremstrommel ein. Zum Betätigen der erfindungsgemäßen Trommelbremsvorrichtung wird ein Schub in etwa in Umfangrichtung auf ein Ende des Bremsbandes ausgeübt und dadurch dieses Ende des Bremsbandes von Innen an die Bremstrommel angedrückt. Der auf das Ende des Bremsbandes ausgeübte Schub kann auch schräg nach außen erfolgen, d. h: mit einer radial nach außen gerichteten Komponente. Während der Betätigung der Trommelbremsvorrichtung wird ein anderes Ende des Bremsbandes in Umfangsrichtung abgestützt. Der auf das eine Ende des Bremsbandes ausgeübte Schub in Umfangsrichtung setzt sich über die gesamte Länge des Bremsbandes fort, so dass das Bremsband über seine gesamte Länge von Innen an die Bremstrommel angedrückt wird und dadurch ein Bremsmoment auf die Bremstrommel ausübt.

Zum Betätigen und zum Lösen weist die erfindungsgemäße Trommelbremsvorrichtung zwei Ringe auf, die drehbar um die selbe Achse wie die Bremstrommel gelagert und die unabhängig voneinander drehbar antreibbar sind. Ein Ring ist über ein Übertragungsglied mit dem einen Ende des Bremsbandes und der andere Ring über ein Übertragungsglied mit dem anderen Ende des Bremsbandes verbunden. Zum Betätigen der Trommelbremsvorrichtung wird der eine Ring in Drehrichtung der Bremstrommel verdreht, so dass sich das Bremsband von innen an die Bremstrommel anlegt und diese bremst. Zum Lösen der Trommelbremsvorrichtung wird der andere Ring ebenfalls in Drehrichtung der Bremstrommel gedreht. Sowohl das Betätigen als auch das Lösen der Trommelbremsvorrichtung erfolgt durch Drehen eines der beiden Ringe jeweils in Drehrichtung der Bremstrommel, das Betätigen und das Lösen wird von der Drehung der Bremstrommel unterstützt.

Es reicht aus, wenn sich das Bremsband über einen Umfangsabschnitt der Trommelbremsvorrichtung erstreckt. Vorzugsweise erstreckt sich das Bremsband über nahezu den gesamten Umfang der Trommelbremsvorrichtung, so dass zwischen den beiden Enden des Bremsbandes ein in bezug auf den Umfang der Bremstrommel kleiner Abstand besteht.

Die erfindungsgemäße Trommelbremsvorrichtung hat den Vorteil, dass ihr Bremsband aufgrund seiner Biegsamkeit in radialer Richtung der Bremstrommel über seine gesamte Umfangslänge gleichmäßig, d. h. mit gleicher Andruckkraft radial nach außen innen an der Bremstrommel anliegt. Eine örtliche Überanspruchung des Bremsbandes wird vermieden. Das Bremsband liegt unabhängig vom einem Abnutzungszustands des Bremsbandes und der Bremstrommel immer gleichmäßig über seinen gesamten Umfang an der Bremstrommel an. Auch bei einer Erwärmung und Ausdehnung der Bremstrommel liegt das Bremsband auf seiner gesamten Länge gleichmäßig und damit optimal an der Bremstrommel an. Eine örtliche Überhitzung wird durch eine örtlich erhöhte Andruckkraft das Bremsbandes an die Bremstrommel wird vermieden.

Beim Betätigen der erfindungsgemäßen Trommelbremsvorrichtung bewirkt eine von der rotierenden Bremstrommel auf das Bremsband ausgeübte Reibungskraft eine Kraft in Umfangsrichtung auf das Bremsband, das den zum Betätigen der Trommelbremsvorrichtung auf das eine Ende des Bremsbandes ausgeübten Schub unterstützt. Die von der Bremstrommel beim Betätigen der Trommelbremsvorrichtung auf das Bremsband ausgeübte Reibungskraft erhöht ein Bremsmoment der Trommelbremsvorrichtung. Die erfindungsgemäße Trommelbremsvorrichtung weist eine hohe, beherrschbare Verstärkung der Bremskraft auf, es lässt sich mit einer geringen Schubkraft (Betätigungskraft) auf das eine Ende des Bremsbandes ein hohes Bremsmoment erzeugen. Mit beherrschbar ist gemeint, dass ein Blockieren der Bremstrommel aufgrund der Verstärkung der Bremskraft ohne Erhöhung des auf das Ende des Bremsbandes ausgeübten Schubs vermieden wird.

Die Unteransprüche haben vorteilhafte Ausgestaltungen und Weiterbildungen der im Anspruch 1 angegebenen Erfindung zum Gegenstand.

Das Bremsband der erfindungsgemäßen Trornrnelbremsvorrichtung kann ein in Umfangsrichtung durchgehendes, in radialer Richtung biegbares Bremsband aufweisen. Das Bremsband kann beispielsweise in radialer Richtung elastisch oder biegeschlaff sein. In Umfangsrichtung ist das Bremsband vorzugsweise drucksteif, so dass es sich beim Betätigen der Trommelbremsvorrichtung nicht oder nur gering verkürzt. Auch kann zur Ausbildung des Bremsbandes ein in Umfangsrichtung durchgehender oder unterbrochener Reibbremsbelag auf ein biegbares Trägerband aufgebracht sein. Bei einer Ausgestaltung der Erfindung ist das Bremsband aus gelenkig miteinander verbundenen Gliedern zusammengesetzt (Anspruch 2).

### Zeichnung

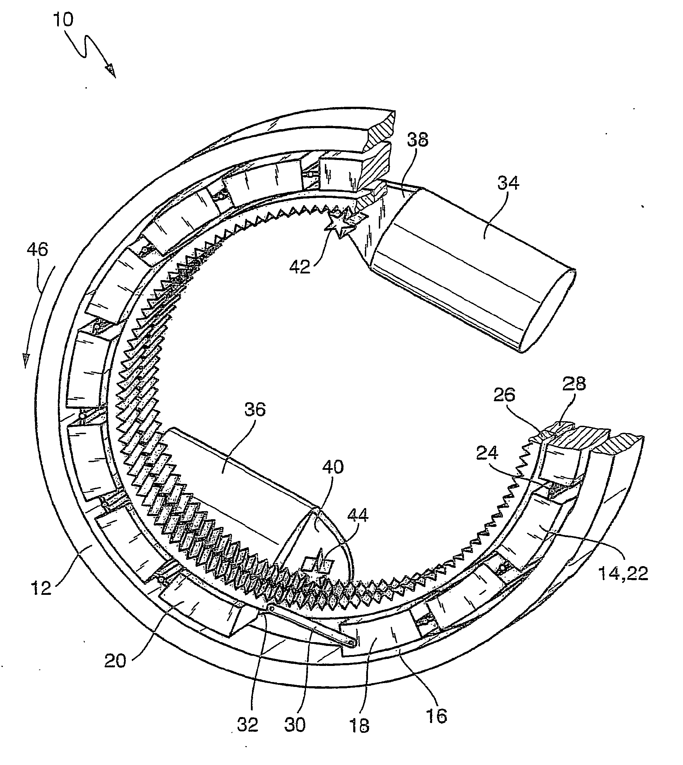

Die Erfindung wird nachfolgend anhand eines in der Zeichnung dargestellten Ausführungsbeispiels näher erläutert. Die einzige Figur zeigt in einer vereinfachten, perspektivischen Schemadarstellung eine erfindungsgemäße Trommelbremsvorrichtung

### Beschreibung des Ausführungsbeispiels

Die in der Zeichnung dargestellte, erfindungsgemäße Trommelbremsvorrichtung 10 ist als Radbremse für ein Fahrzeugrad eines nicht dargestellten Kraftfahrzeugs vorgesehen. Die Trommelbremsvorrichtung 10 weist eine Bremstrommel 12 auf, von der in der Zeichnung lediglich eine Umfangswand dargestellt und eine Stirnwand weggelassen ist, um die übrigen Teile der Trommelbremsvorrichtung 10 sichtbar zu machen.

Des weiteren ist von der Trommelbremsvorrichtung 10 ungefähr ¼ Kreissegment weggebrochen dargestellt um den Aufbau der Trommelbremsvorrichtung 10 deutlich erkennbar darzustellen.

In der Bremstrommel 12 liegt ein Bremsband 14 ein. Das Bremsband 14 liegt koaxial in der Bremstrommel 12 ein. Bei gelöster Trommelbremsvorrichtung 10 besteht ein Spalt 16 zwischen der Bremstrommel 12 und dem Bremsband 14. Das Bremsband 14 erstreckt sich über nahezu einen vollen Umfang der Bremstrommel 12, zwischen zwei Enden 18, 20 des Bremsbandes 14 besteht ein im Verhältnis zum Umfang der Bremstrommel 12 kurzer Abstand. Das Bremsband 14 ist in radialer Richtung der Bremstrommel 12 biegbar. Im dargestellten Ausführungsbeispiel ist das Bremsband 14 aus Gliedern 22 zusammengesetzt, die über Gelenke 24 schwenkbar miteinander verbunden sind. Gedachte Schwenkachsen der Gelenke 24 verlaufen achsparallel zu einer gedachten Drehachse der Trommelbremsvorrichtung 10.

Zur Betätigung der Trommelbremsvorrichtung 10 wird ein Ende (Endglied) 18 des Bremsbandes 14 mit einem Schub in etwa in Umfangsrichtung beaufschlagt und das andere Ende (Endglied) 20 des Bremsbandes 14 in Umfangsrichtung festgehalten. Der Schub auf das eine Ende 18 des Bremsbandes 14 setzt sich über dessen Glieder 22 bis zum andere, abgestützten Ende 20 des Bremsbandes 14 fort. Durch den Schub in Umfangsrichtung werden sämtliche Glieder 22 des Bremsbandes 14 gleichmäßig, d. h. mit gleicher Kraft, radial nach außen und dadurch von innen gegen die Bremstrommel 12 gedrückt. Dies bewirkt eine Reibungskraft zwischen dem Bremsband 14 und der Bremstrommel 12, die die Bremstrommel 12 bremst. Die Reibungskraft zwischen der Bremstrommel 12 und dem Bremsband 14 bewirkt eine Kraft in Umfangsrichtung auf das Bremsband 14 und unterstütz den auf das Ende 18 des Bremsbandes 14 ausgeübten Schub. Die Trommelbremsvorrichtung 10 weist eine Verstärkung ihrer Bremskraft in dem Sinne auf, dass der zum Betätigen der Trommelbremsvorrichtung 10 auf das eine Ende 18 des Bremsbandes 14 ausgeübte Schub und dadurch ein auf die Bremstrommel 12 ausgeübtes Bremsmoment durch die von der Bremstrommel 12 auf das Bremsband 14 ausgeübte Reibungskraft erhöht werden. Es lässt sich mit einem schwachen Schub auf das Ende 18 des Bremsbandes 14 ein großes Bremsmoment erzielen. Der Schub auf das Ende 18 des Bremsbandes 14 entspricht einer Betätigungskraft der Trommelbremsvorrichtung 10.

Zum Lösen der Trommelbremsvorrichtung 10 wird ein Zug in etwa in Umfangsrichtung auf ein Ende 18, 20 des Bremsbandes 14 ausgeübt.

Zum Betätigen und zum Lösen weist die Trommelbremsvorrichtung 10 zwei Ringe auf, die koaxial zur Trommelbremsvorrichtung 10 angeordnet und drehbar antreibbar sind. Im dargestellten und beschriebenen Ausführungsbeispiel der Erfindung sind die beiden Ringe als Zahnringe 26, 28 mit Innenverzahnung ausgebildet, sie sind innerhalb des Bremsbandes 14 angeordnet. Eine andere Anordnung der Zahnringe 26, 28 beispielsweise seitlich neben dem Bremsband 14 ist grundsätzlich ebenfalls möglich (nicht dargestellt). Jeder der beiden Zahnringe 26, 28 ist über einen Hebel (Übertragungsglied) 30, 32 mit einem Ende 18, 20 des Bremsbandes 14 verbunden. Die Hebel 30, 32 stehen schräg zu einer Umfangsrichtung vom Zahnring 26, 28 nach außen zum Ende 18, 20 des Bremsbandes 14, so dass durch Drehung des Zahnrings 26, 28 ein Schub als Druckkraft oder ein Zug als Zugkraft über den Hebel 30, 32 auf das Ende 18, 20 des Bremsbandes 14 ausübbar ist. Durch die Schrägstellung der Hebel 30, 32 weist der Schub eine Komponente in radialer Richtung nach außen auf, die einer Komponente des Schubs in Umfangsrichtung überlagert ist.

Zum Drehen der Zahnringe 26, 28 ist jedem Zahnring 26, 28 ein Elektromotor 34, 36 mit angeflanschtem Getriebe 38, 40 zugeordnet, wobei ein Zahnrad 42, 44 das drehfest auf einer Abtriebswelle des Getriebes 38, 40 angebracht ist, mit dem jeweiligen Zahnring 26, 28 kämmt. Die Getriebe 38, 40 der Elektromotoren 34, 36 sind selbsthemmend ausgebildet. Durch drehenden Antrieb eines Zahnrings 26 mit dem zugeordneten Elektromotor 34 lässt sich über den Hebel 30 ein Schub auf das Ende 18 des Bremsbandes 14 ausüben, der in oben beschriebener Weise das Bremsband 14 gleichmäßig über seine gesamte Länge von innen an die Bremstrommel 12 andrückt und ein Bremsmoment auf die Bremstrommel 12 bewirkt. Da die Getriebe 38, 40 der Elektromotoren 34, 36 selbsthemmend sind, stützt der jeweils andere Elektromotor 36 über das angeflanschte Getriebe 40, den anderen Zahnring 28 und den Hebel 32 das andere Ende 20 des Bremsbandes 14 in Umfangsrichtung ab. Zum Lösen der Trommelbremsvorrichtung 10 wird durch Rückdrehen desselben Zahnrings 26 oder durch Drehen des anderen Zahnrings 28 in gleicher Richtung über den Hebel 30, 32 ein Zug auf ein Ende 18, 20 des Bremsbandes 14 ausgeübt.

Vorzugsweise wird der Schub zum Betätigen der Trommelbremsvorrichtung 10 auf ein in Drehrichtung der Bremstrommel 12 vorderes Ende des Bremsbandes 14 ausgeübt. Bei einer angenommenen Drehrichtung der Bremstrommel 12 in Richtung des Pfeils 46 wird der Schub also auf das in der Zeichnung mit 18 bezeichnete Ende des Bremsbandes 14 ausgeübt. Dieses Ende 18 lässt sich auch als auflaufendes Ende des Bremsbandes 14 bezeichnen. Die Ausübung des Schubs auf das in Drehrichtung der Bremstrommel 12 vordere Ende 18 des Bremsbandes 14 hat den Vorteil, dass eine von der Bremstrommel 12 auf das Ende 18 ausgeübte Reibungskraft in derselben Richtung wie der vom Elektromotor 34 über das Getriebe 38, den Zahnring 26 und den Hebel 30 auf das Ende 18 des Bremsbandes 14 ausgeübte Schub wirkt. Dadurch wird die Betätigung der Trommelbremsvorrichtung 10 mit dem Elektromotor 34 durch die von der Bremstrommel 12 auf das Ende 18 des Bremsbandes 14 ausgeübte Reibungskraft unterstützt. Dies hat den Vorteil, dass ein verhältnismäßig kleiner und leistungsschwacher Elektromotor 34 zum Betätigen der Trommelbremsvorrichtung 10 ausreicht. Weiterer Vorteil ist eine hohe Dynamik beim Betätigen der Trommelbremsvorrichtung 10.

Zum Lösen der Trommelbremsvorrichtung 10 wird mit dem anderen Elektromotor 36 über dessen Getriebe 40 der andere Zahnring 28 in derselben Drehrichtung wie zuvor der eine Zahnring 26 zum Betätigen der Trommelbremsvorrichtung 10 drehend angetrieben. Die Drehrichtung der beiden Zahnringe 26, 28 zum Betätigen und zum Lösen der Trommelbremsvorrichtung 10 ist also die Drehrichtung 46 der Bremstrommel 12. Durch die Drehung des Zahnrings 28 wird über den Hebel 32 ein Zug auf das in Drehrichtung der Bremstrommel 12 hintere Ende 20 des Bremsbandes 14 ausgeübt und das Bremsband 14 von der Bremstrommel 12 gelöst, so dass die Bremstrommel 12 wieder frei drehbar ist. Das in Drehrichtung 46 der Bremstrommel 12 hintere Ende des Bremsbandes 14 lässt sich auch als ablaufendes Ende 20 des Bremsbandes 14 bezeichnen. Der Zug auf das in Drehrichtung 46 hintere Ende 20 des Bremsbandes 14 wird durch die von der Bremstrommel 12 auf das Bremsband 14 ausgeübte Reibungskraft in Umfangsrichtung unterstützt. Das Lösen der Trommelbremsvorrichtung 10 durch Zug an dem in Drehrichtung der Bremstrommel 12 hinteren Ende 20 des Bremsbrandes 14 hat also ebenfalls den Vorteil einer hohen Dynamik und ermöglicht die Verwendung eines kleinen und leistungsschwachen Elektromotors 36.

Da die Getriebe 38, 40 der Elektromotoren 34, 36 selbsthemmend sind, brauchen die Elektromotoren 34, 36 zum Konstanthalten eines Bremsmoments nicht bestromt werden. Dies und die das Betätigen und das Lösen unterstützende Wirkung der von der Bremstrommel 12 auf das Bremsband 14 ausgeübten Reibungskraft bewirken einen geringen Stromverbrauch der Trommelbremsvorrichtung 10, die sich deswegen sowie aufgrund der oben beschriebenen Verstärkung der Bremskraft und infolge ihrer hohen Dynamik beim Betätigen und beim Lösen gut als elektromechanische Radbremsvorrichtung für einen Kraftwagen eignet. Da die Getriebe 38, 40 der Elektromotoren 34, 36 selbsthemmend sind und ein aufgebrachtes Bremsmoment ohne Bestromung der Elektromotoren 34, 36 aufrecht erhalten, eignet sich die Trommelbremsvorrichtung 10 als Feststellbremse.

Durch ein Drehen des Zahnrings 28 beim Lösen der Trommelbremsvorrichtung 10 um beispielsweise einen vorgegebenen Drehwinkel wird ein automatischer Verschleißausgleich erreicht.

Grundsätzlich lässt sich die Trommelbremsvorrichtung 10 auch mit nur einem Elektromotor 34, einem Getriebe 38 und einem Zahnring 26 oder auch einer sonstigen, nicht dargestellten Betätigungseinrichtung, mit der ein Schub oder Zug auf ein Ende 18 des Bremsbandes ausübbar ist, betätigen und lösen, wenn das andere Ende 20 des Bremsbandes 14 in Umfangsrichtung feststehend abgestützt ist. Die Trommelbremsvorrichtung 10 lässt sich auf diese Weise einfacher ausbilden. Die dargestellte, aufwendigere Ausbildung der Trommelbremsvorrichtung 10 mit zwei Elektromotoren 34, 36, zwei Getrieben 38, 40 und zwei Zahnringen 26, 28 hat allerdings den oben beschriebenen Vorteil, dass sowohl das Betätigen als auch das Lösen durch die von der Bremstrommel 12 auf das Bremsband 14 ausgeübte Reibungskraft unterstützt wird und dadurch kleine und leistungsschwache Elektromotoren 34, 36 ermöglicht. Weiterer Vorteil der dargestellten und beschriebenen Ausbildung der Trommelbremsvorrichtung 10 ist, dass in beiden Drehrichtungen der Bremstrommel 12 zum Betätigen der Trommelbremsvorrichtung 10 ein Schub auf das in Drehrichtung vordere Ende 18, 20 des Bremsbandes 14 und zum Lösen ein Zug auf das in Drehrichtung der Bremstrommel 12 hintere Ende 18, 20 des Bremsbandes 14 ausübbar ist. Die Unterstützung des Betätigens des Lösens der Trommelbremsvorrichtung 10 ist drehrichtungsunabhängig.

## Patentansprüche

1. Trommelbremsvorrichtung mit einer Bremstrommel (12), und mit einem in der Bremstrommel (12) einliegenden, in radialer Richtung der Bremstrommel (12) biegbaren Bremsband (14), das zum Betätigen der Trommelbremsvorrichtung (10) durch Schub in etwa in Umfangsrichtung auf ein Ende (18, 20) des Bremsbandes (14) von innen an die Bremstrommel (12) andrückbar ist, **dadurch gekennzeichnet, dass** die Trommelbremsvorrichtung (10) zum Betätigen und zum Lösen zwei Ringe (26, 28) aufweist, die drehbar um dieselbe Achse wie die Bremstrommel (12) gelagert und die unabhängig voneinander drehbar antreibbar sind und dass ein Ring (26) über ein Übertragungsglied (30) mit dem einen Ende (18) des Bremsbandes (14) und der andere Ring (28) über ein Übertragungsglied (32) mit dem anderen Ende (20) des Bremsbandes (14) verbunden ist.

2. Trommelbremsvorrichtung nach Anspruch 1, **dadurch gekennzeichnet, dass** das Bremsband (14) gelenkig miteinander verbundene Glieder (22) aufweist.

3. Trommelbremsvorrichtung nach Anspruch 1, **dadurch gekennzeichnet, dass** der Schub auf ein in Drehrichtung (46) der Bremstrommel (12) vorderes Ende (18) des Bremsbandes (14) ausgeübt wird.

4. Trommelbremsvorrichtung nach Anspruch 1, **dadurch gekennzeichnet, dass** die Trommelbremsvorrichtung (10) durch Zug in Umfangsrichtung an einem in Drehrichtung (46) der Bremstrommel (12) hinteren Ende (20) des Bremsbandes (14) gelöst wird.

5. Trommelbremsvorrichtung nach Anspruch 1, **dadurch gekennzeichnet, dass** die Ringe Zahnringe (26, 28) sind.

6. Trommelbremsvorrichtung nach Anspruch 1, **dadurch gekennzeichnet, dass** die Ringe (26, 28) innerhalb des Bremsbandes (14) angeordnet sind.

7. Trommelbremsvorrichtung nach Anspruch 1, **dadurch gekennzeichnet, dass** die Trommelbremsvorrichtung (10) einen Elektromotor (34, 36) zum drehenden Antrieb eines Rings (26, 28) aufweist.

8. Trommelbremsvorrichtung nach Anspruch 5, **dadurch gekennzeichnet, dass** der Elektromotor (34, 36) ein selbsthemmendes Getriebe (38, 40) aufweist.

## Claims

1. Drum brake system, with a brake drum (12), and with a brake band (14), which is located in the brake drum (12), is bendable in the radial direction of the brake drum (12) and, in order to actuate the drum brake system (10), can be pressed from the inside against the brake drum (12) by means of thrust approximately in the circumferential direction on one end (18, 20) of the brake band (14), **characterized in that**, for actuation and for release purposes, the drum brake system (10) has two rings (26, 28) which are mounted rotatably about the same axis as the brake drum (12) and which can be driven rotatably independently of each other, and **in that** one ring (26) is connected to the one end (18) of the brake band (14) via a transmission element (30) and the other ring (28) is connected to the other end (20) of the brake band (14) via a transmission element (32).

2. Drum brake system according to Claim 1, **characterized in that** the brake band (14) has elements (22) which are connected to one another in an articulated manner.

3. Drum brake system according to Claim 1, **characterized in that** the thrust exerted on a front end (18) of the brake band (14) in the direction of rotation (46) of the brake drum (12).

4. Drum brake system according to Claim 1, **characterized in that** the drum brake system (10) is released by a tensile force in the circumferential direction on a rear end (20) of the brake band (14) in the direction of rotation (46) of the brake drum (12).

5. Drum brake system according to Claim 1, **characterized in that** rings are toothed rings (26, 28).

6. Drum brake system according to Claim 1, **characterized in that** the rings (26, 28) are arranged within the brake band (14).

7. Drum brake system according to Claim 1, **characterized in that** drum brake system (10) has an electric motor (34, 36) for the rotating drive of a ring (26, 28).

8. Drum brake system according to Claim 5, **characterized in that** the electric motor (34, 36) has a self-locking gear mechanism (38, 40).

## Revendications

1. Système de frein à tambour comprenant un tambour de frein (12) et un collier de frein (14) pliable dans la direction radiale du tambour de frein (12) dans lequel il se trouve et pouvant être serré de l'intérieur contre le tambour de frein (12) par la poussée plus ou moins dans la direction périphérique sur une extrémité (18, 20) du collier de frein (14) afin d'actionner le système de frein à tambour (10),
**caractérisé en ce que**
pour le serrage et le desserrage, le système de frein à tambour (10) présente deux bagues (26, 28) pouvant tourner autour du même axe que le tambour de frein (12) et pouvant être entraînées indépendamment l'une de l'autre, et une bague (26) est reliée à une extrémité (18) du collier de frein (14) par un organe de transmission (30) et l'autre bague (28) à l'autre extrémité (20) du collier de frein (14) par un organe de transmission (32).

2. Système de frein à tambour selon la revendication 1,
**caractérisé en ce que**
le collier de frein (14) présente des éléments (22) reliés les uns aux autres de manière articulée.

3. Système de frein à tambour selon la revendication 1,
**caractérisé en ce que**
la poussée s'exerce sur une extrémité avant (18) du collier de frein (14) dans la direction de rotation (46) du tambour de frein (12).

4. Système de frein à tambour selon la revendication 1,
**caractérisé en ce que**
le système de frein à tambour (10) est desserré par la traction dans la direction périphérique sur une extrémité arrière (20) du collier de frein dans la direction de rotation (46) du tambour de frein (12).

5. Système de frein à tambour selon la revendication 1,
**caractérisé en ce que**
les bagues sont des couronnes dentées (26, 28).

6. Système de frein à tambour selon la revendication 1,
**caractérisé en ce que**
les bagues (26, 28) sont placées dans le collier de frein (14).

7. Système de frein à tambour selon la revendication 1,
**caractérisé en ce que**
le système de frein à tambour (10) présente un électromoteur (34, 36) pour entraîner une bague (26, 28) en rotation.

8. Système de frein à tambour selon la revendication 5,
**caractérisé en ce que**
l'électromoteur (34, 36) présente un engrenage (38, 40) autobloquant.
